# NEUE EUROPÄISCHE PATENTSCHRIFT

(11) **EP 2 079 763 B2**
(45) Veröffentlichungstag und Bekanntmachung des Hinweises auf die Entscheidung über den Einspruch: **01.03.2017**
(45) Hinweis auf die Patenterteilung: 15.12.2010
(21) Anmeldenummer: 07820800.6
(22) Anmeldetag: 02.10.2007
(51) Int. Cl.: C08F 2/00, C08F 2/10, C08F 2/16, C08F 2/18, A61L 15/60

(54) **VERFAHREN ZUR HERSTELLUNG WASSERABSORBIERENDER POLYMERPARTIKEL DURCH POLYMERISATION VON TROPFEN EINER MONOMERLÖSUNG**
METHOD FOR THE PRODUCTION OF WATER ABSORBENT POLYMER PARTICLES BY POLYMERIZING DROPS OF A MONOMER SOLUTION
PROCÉDÉ POUR LA PRÉPARATION DE PARTICULES DE POLYMÈRE ABSORBANT L'EAU GRÂCE À UNE POLYMÉRISATION DE GOUTTES D'UNE SOLUTION DE MONOMÈRE

(30) Priorität: 05.10.2006 EP 06121840
(43) Veröffentlichungstag der Anmeldung: 22.07.2009
(73) Patentinhaber: BASF SE, 67056 Ludwigshafen am Rhein (DE)
(72) Erfinder: LÖSCH, Dennis, 67122 Altrip (DE); KRÜGER, Marco, 68161 Mannheim (DE); STAMMER, Achim, 67251 Freinsheim (DE)
(74) Vertreter: BASF IP Association
(86) Internationale Anmeldenummer: PCT/EP2007/060418
(87) Internationale Veröffentlichungsnummer: WO 2008/040715

(56) Entgegenhaltungen:
- WO-A-2005/111088
- WO-A-2006/079631
- WO-A-2007/093531
- WO-A-2008/009580
- WO-A-2008/009598
- WO-A-2008/009611
- WO-A-2008/009612
- WO-A1-96/40427
- WO-A1-2006/024369
- JP-A- H09 255 704
- US-A1- 2007 244 280
- US-A1- 2008 188 586

## Beschreibung

Die vorliegende Erfindung betrifft ein Verfahren zur Herstellung wasserabsorbierender Polymerpartikel durch Polymerisation von Tropfen einer Monomerlösung, in einer die Tropfen umgebenden Gasphase, wobei der Initiator der Monomerlösung 0,5 bis 60 Sekunden vor der Tropfenerzeugung zugesetzt wird.

Die Herstellung wasserabsorbierender Polymerpartikel wird in der Monographie "Modern Superabsorbent Polymer Technology", F.L. Buchholz und A.T. Graham, Wiley-VCH, 1998, Seiten 71 bis 103, beschrieben.

Wasserabsorbierende Polymere werden als wässrige Lösungen absorbierende Produkte zur Herstellung von Windeln, Tampons, Damenbinden und anderen Hygieneartikeln, aber auch als wasserzurückhaltende Mittel im landwirtschaftlichen Gartenbau verwendet.

Durch Sprühpolymerisation konnten die Verfahrensschritte Polymerisation und Trocknung zusammengefasst werden. Zusätzlich konnte die Partikelgröße durch geeignete Verfahrensführung in gewissen Grenzen eingestellt werden.

Die Herstellung wasserabsorbierender Polymerpartikel durch Polymerisation von Tropfen einer Monomerlösung wird beispielsweise in EP 348 180 A1, WO 96/40427 A1, US 5,269,980, DE 103 14 466 A1, DE 103 40 253 A1 und DE 10 2004 024 437 A1, WO 2006/077054 A1 sowie der älteren deutschen Anmeldung mit dem Aktenzeichen 102006001596.7 und der älteren PCT-Anmeldung mit dem Aktenzeichen PCT/EP2006/062252 beschrieben.

JP 05-132503 A offenbart ein Sprühpolymerisationsverfahren, bei dem die Polymerisation durch einen Redox-Initiator gestartet wird. Dabei wird eine Monomerlösung, enthaltend ein Reduktionsmittel, zusammen mit einer weiteren Monomerlösung, enthaltend ein Oxidationsmittel, so dosiert, dass sich die Monomerlösungen erst außerhalb der Sprühdüse mischen.

Aufgabe der vorliegenden Erfindung war die Bereitstellung eines verbesserten Verfahrens zur Herstellung wasserabsorbierender Polymerpartikel durch Polymerisation von Tropfen einer Monomerlösung in einer die Tropfen umgebenden Gasphase.

Insbesondere war es eine Aufgabe der vorliegenden Erfindung ein Verfahren bereitzustellen, das wenig störanfällig ist und gleichzeitig qualitativ hochwertige Produkte erzeugt.

Gelöst wurde die Aufgabe durch ein Verfahren zur Herstellung wasserabsorbierender Polymerpartikel durch Polymerisation von Tropfen, enthaltend
a) mindestens ein ethylenisch ungesättigtes Monomer,
b) mindestens einen Vernetzer,
c) mindestens einen Initiator,
d) Wasser,
in einer die Tropfen umgebenden Gasphase, **dadurch gekennzeichnet, dass** der Initiator c) der Monomerlösung 1,2 bis 15 Sekunden vor der Tropfenerzeugung zugesetzt wird.

Üblicherweise werden Monomer a), Vernetzer b) und Wasser d) vorgemischt. Die Zeit von der Zugabe des Initiators c) bis zur Tropfenerzeugung ist die mittlere Verweilzeit der Monomerlösung von dem Zeitpunkt an dem der Initiator c) zugesetzt wird bis zu dem Zeitpunkt an dem die Monomerlösung unter Ausbildung von Tropfen in den Reaktionsraum übertritt. Die Verweilzeit kann über das verfügbare Volumen und den Durchsatz ermittelt werden.

Vorzugsweise wird ein statischer Mischer als Mischer verwendet.

Die erzeugten Tropfen weisen einen mittleren Durchmesser von vorzugsweise mindestens 200 µm, besonders bevorzugt von mindestens 250 µm, ganz besonders bevorzugt von mindestens 300 µm, auf, wobei der Tropfendurchmesser durch Lichtstreuung bestimmt werden kann und den volumengemittelten mittleren Durchmesser bedeutet.

Die Tropfen sind vorzugsweise monodispers, besonders bevorzugt weisen weniger als 10 Gew.-% der Tropfen einen Durchmesser auf, der mehr als 50% vom mittleren Durchmesser abweicht.

Die gemäß dem erfindungsgemäßen Verfahren erhältlichen wasserabsorbierenden Polymerpartikel weisen eine Zentrifugenretentionskapazität (CRC) von typischerweise mindestens 20 g/g, vorzugsweise mindestens 25 g/g, bevorzugt mindestens 30 g/g, besonders bevorzugt mindestens 32 g/g, ganz besonders bevorzugt mindestens 34 g/g, auf. Die Zentrifugenretentionskapazität (CRC) der wasserabsorbierenden Polymerpartikel beträgt üblicherweise weniger als 50 g/g.

Die gemäß dem erfindungsgemäßen Verfahren erhältlichen wasserabsorbierenden Polymerpartikel weisen einen Gehalt an Extrahierbaren von typischerweise weniger als 15 Gew.-%, vorzugsweise weniger als 10 Gew.-%, bevorzugt weniger als 5 Gew.-%, besonders bevorzugt weniger als 4 Gew.-%, ganz besonders bevorzugt weniger als 3 Gew.-%, auf.

Die gemäß dem erfindungsgemäßen Verfahren erhältlichen wasserabsorbierenden Polymerpartikel weisen einen Gehalt an Restmonomeren von typischerweise weniger als 15 Gew.-%, vorzugsweise weniger als 10 Gew.-%, bevorzugt weniger als 5 Gew.-%, besonders bevorzugt weniger als 4 Gew.-%, ganz besonders bevorzugt weniger als 3 Gew.-%, auf.

Die gemäß dem erfindungsgemäßen Verfahren erhältlichen wasserabsorbierenden Polymerpartikel weisen ein Verhältnis von Zentrifugenretentionskapazität (CRC) zu Extrahierbaren von typischerweise mindestens 5, vorzugsweise mindestens 6, bevorzugt mindestens 7, besonders bevorzugt mindestens 8, ganz besonders bevorzugt mindestens 8,5, auf. Das Verhältnis ist der Quotient aus Zentrifugenretentionskapazität (CRC) in g/g und dem Gehalt an Extrahierbaren in Gew.-%.

Die gemäß dem erfindungsgemäßen Verfahren erhältlichen wasserabsorbierenden Polymerpartikel weisen ein Verhältnis von Zentrifugenretentionskapazität (CRC) zu Restmonomeren von typischerweise mindestens 50, vorzugsweise mindestens 75, bevorzugt mindestens 100, besonders bevorzugt mindestens 125, ganz besonders bevorzugt mindestens 150, auf. Das Verhältnis ist der Quotient aus Zentrifugenretentionskapazität (CRC) in g/g und dem Gehalt an Restmonomeren in Gew.-%.

Der mittlere Durchmesser der gemäß dem erfindungsgemäßen Verfahren erhältlichen wasserabsorbierenden Polymerpartikel beträgt vorzugsweise mindestens 200 µm, besonders bevorzugt von 250 bis 600 µm, ganz besonders von 300 bis 500 µm, wobei der Partikeldurchmesser durch Lichtstreuung bestimmt werden kann und den volumengemittelten mittleren Durchmesser bedeutet. 90% der Polymerpartikel weisen einen Durchmesser von vorzugsweise 100 bis 800 µm, besonders bevorzugt von 150 bis 700 µm, ganz besonders bevorzugt von 200 bis 600 µm, auf.

Die Monomeren a) sind vorzugsweise wasserlöslich, d.h. die Löslichkeit in Wasser bei 23°C beträgt typischerweise mindestens 1 g/100 g Wasser, vorzugsweise mindestens 5 g/100 g Wasser, besonders bevorzugt mindestens 25 g/100 g Wasser, ganz besonders bevorzugt mindestens 50 g/100 g Wasser, und haben vorzugsweise mindestens je eine Säuregruppe.

Geeignete Monomere a) sind beispielsweise ethylenisch ungesättigte Carbonsäuren, wie Acrylsäure, Methacrylsäure, Maleinsäure, Fumarsäure und Itaconsäure. Besonders bevorzugte Monomere sind Acrylsäure und Methacrylsäure. Ganz besonders bevorzugt ist Acrylsäure.

Die bevorzugten Monomere a) haben mindestens eine Säuregruppe, wobei die Säuregruppen vorzugsweise zumindest teilweise neutralisiert sind.

Der Anteil an Acrylsäure und/oder deren Salzen an der Gesamtmenge der Monomeren a) beträgt vorzugsweise mindestens 50 mol-%, besonders bevorzugt mindestens 90 mol-%, ganz besonders bevorzugt mindestens 95 mol-%.

Die Säuregruppen der Monomere a) sind üblicherweise teilweise neutralisiert, vorzugsweise zu 25 bis 85 mol-%, bevorzugt zu 50 bis 80 mol-%, besonders bevorzugt 60 bis 75 mol-%, wobei die üblichen Neutralisationsmittel verwendet werden können, vorzugsweise Alkalimetallhydroxide, Alkalimetalloxide, Alkalimetallcarbonate oder Alkalimetallhydrogencarbonate sowie deren Mischungen. Statt Alkalimetallsalzen können auch Ammoniumsalze verwendet werden. Natrium und Kalium sind als Alkalimetalle besonders bevorzugt, ganz besonders bevorzugt sind jedoch Natriumhydroxid, Natriumcarbonat oder Natriumhydrogencarbonat sowie deren Mischungen. Üblicherweise wird die Neutralisation durch Einmischung des Neutralisationsmittels als wässrige Lösung, als Schmelze, oder bevorzugt auch als Feststoff erreicht. Beispielsweise kann Natriumhydroxid mit einem Wasseranteil deutlich unter 50 Gew.-% als wachsartige Masse mit einem Schmelzpunkt oberhalb 23°C vorliegen. In diesem Fall ist eine Dosierung als Stückgut oder Schmelze bei erhöhter Temperatur möglich.

Die Monomere a), insbesondere Acrylsäure, enthalten vorzugsweise bis zu 0,025 Gew.-% eines Hydrochinonhalbethers. Bevorzugte Hydrochinonhalbether sind Hydrochinonmonomethylether (MEHQ) und/oder Tocopherole.

Unter Tocopherol werden Verbindungen der folgenden Formel verstanden 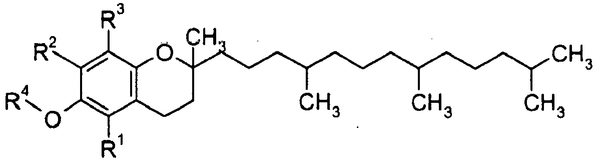 wobei R¹ Wasserstoff oder Methyl, R² Wasserstoff oder Methyl, R³ Wasserstoff oder Methyl und R⁴ Wasserstoff oder ein Säurerest mit 1 bis 20 Kohlenstoffatomen bedeutet.

Bevorzugte Reste für R⁴ sind Acetyl, Ascorbyl, Succinyl, Nicotinyl und andere physiologisch verträgliche Carbonsäuren. Die Carbonsäuren können Mono-, Di- oder Tricarbonsäuren sein.

Bevorzugt ist atpha-Tocopherol mit R¹ = R² = R³ = Methyl, insbesondere racemisches alpha-Tocopherol. R¹ ist besonders bevorzugt Wasserstoff oder Acetyl. Insbesondere bevorzugt ist RRR-alpha-Tocopherol.

Die Monomerlösung enthält vorzugsweise höchstens 160 Gew.-ppm, bevorzugt höchstens 130 Gew.-ppm, besonders bevorzugt höchstens 70 Gew.-ppm, bevorzugt mindesten 10 Gew.-ppm, besonders bevorzugt mindesten 30 Gew.-ppm, insbesondere um 50 Gew.-ppm, Hydrochinonhalbether, jeweils bezogen auf Acrylsäure, wobei Acrylsäuresalze als Acrylsäure mit berücksichtigt werden. Beispielsweise kann zur Herstellung der Monomerlösung eine Acrylsäure mit einem entsprechenden Gehalt an Hydrochinonhalbether verwendet werden.

Vernetzer b) sind Verbindungen mit mindestens zwei polymerisierbaren Gruppen, die in das Polymernetzwerk radikalisch einpolymerisiert werden können. Geeignete Vernetzer b) sind beispielsweise Ethylenglykoldimethacrylat, Diethylenglykoldiacrylat, Allylmethacrylat, Trimethylolpropantriacrylat, Triallylamin, Tetraallyloxyethan, wie in EP 530 438 A1 beschrieben, Di- und Triacrylate, wie in EP 547 847 A1, EP 559 476 A1, EP 632 068 A1, WO 93/21237 A1, WO 2003/104299 A1, WO 2003/104300 A1, WO 2003/104301 A1 und DE 103 31 450 A1 beschrieben, gemischte Acrylate, die neben Acrylatgruppen weitere ethylenisch ungesättigte Gruppen enthalten, wie in DE 103 31 456 A1 und DE 103 55 401 A1 beschrieben, oder Vernetzermischungen, wie beispielsweise in DE 195 43 368 A1, DE 196 46 484 A1, WO 90/15830 A1 und WO 2002/32962 A2 beschrieben.

Geeignete Vernetzer b) sind insbesondere N,N'-Methylenbisacrylamid und N,N'-Methylenbismethacrylamid, Ester ungesättigter Mono- oder Polycarbonsäuren von Polyolen, wie Diacrylat oder Triacrylat, beispielsweise Butandiol- oder Ethylenglykoldiacrylat bzw. -methacrylat sowie Trimethylolpropantriacrylat und Allylverbindungen, wie Allyl(meth)acrylat, Triallylcyanurat, Maleinsäurediallylester, Polyallylester, Tetraallyloxyethan, Triallylamin, Tetraallylethylendiamin, Allylester der Phosphorsäure sowie Vinylphosphonsäurederivate, wie sie beispielsweise in EP 343 427 A2 beschrieben sind. Weiterhin geeignete Vernetzer b) sind Pentaerythritoldi-, Pentaerythritoltri- und Pentaerythritoltetraallylether, Polyethylenglykoldiallylether, Ethylenglykoldiallylether, Glyzerindi- und Glyzerintriallylether, Polyallylether auf Basis Sorbitol, sowie ethoxylierte Varianten davon. Im erfindungsgemäßen Verfahren einsetzbar sind Di(meth)acrylate von Polyethylenglykolen, wobei das eingesetzte Polyethylenglykol ein Molekulargewicht zwischen 300 und 1000 aufweist.

Besonders vorteilhafte Vernetzer b) sind jedoch Di- und Triacrylate des 3- bis 20-fach ethoxylierten Glyzerins, des 3- bis 20-fach ethoxylierten Trimethylolpropans, des 3- bis 20-fach ethoxylierten Trimethylolethans, insbesondere Di- und Triacrylate des 2- bis 6-fach ethoxylierten Glyzerins oder Trimethylolpropans, des 3-fach propoxylierten Glyzerins oder Trimethylolpropans, sowie des 3-fach gemischt ethoxylierten oder propoxylierten Glyzerins oder Trimethylolpropans, des 15-fach ethoxylierten Glyzerins oder Trimethylolpropans, sowie des mindestens 40-fach ethoxylierten Glyzerins, Trimethylolethans oder Trimethylolpropans.

Ganz besonders bevorzugte Vernetzer b) sind die mit Acrylsäure oder Methacrylsäure zu Di- oder Triacrylaten veresterten mehrfach ethoxylierten und/oder propoxylierten Glyzerine, wie sie beispielsweise in WO 2003/104301 A1 beschrieben sind. Besonders vorteilhaft sind Di- und/oder Triacrylate des 3- bis 10-fach ethoxylierten Glyzerins. Ganz besonders bevorzugt sind Di- oder Triacrylate des 1- bis 5-fach ethoxylierten und/oder propoxylierten Glyzerins. Am meisten bevorzugt sind die Triacrylate des 3-bis 5-fach ethoxylierten und/oder propoxylierten Glyzerins.

Die Monomerlösung enthält vorzugsweise mindestens 0,2 Gew.-%, bevorzugt mindestens 0,4 Gew.-%, besonders bevorzugt mindestens 0,6 Gew.-%, ganz besonders bevorzugt mindestens 0,8 Gew.-%, Vernetzer b), jeweils bezogen auf Monomer a).

Als Initiatoren c) können sämtliche unter den Polymerisationsbedingungen in Radikale zerfallende Verbindungen eingesetzt werden, beispielsweise Peroxide, Hydroperoxide, Wasserstoffperoxid, Persulfate, Azoverbindungen und die sogenannten Redoxinitiatoren. Bevorzugt ist der Einsatz von wasserlöslichen Initiatoren. In manchen Fällen ist es vorteilhaft, Mischungen verschiedener Initiatoren zu verwenden, beispielsweise Mischungen aus Wasserstoffperoxid und Natrium- oder Kaliumperoxodisulfat. Mischungen aus Wasserstoffperoxid und Natriumperoxodisulfat können in jedem beliebigen Verhältnis verwendet werden.

Besonders bevorzugte Initiatoren c) sind Azoinitiatoren, wie 2,2'-Azobis[2-(2-imidazolin-2-yl)propan]dihydrochlorid und 2,2'-Azobis[2-(5-methyl-2-imidazolin-2-yl)propan]dihydrochlorid, und Photoinitiatoren, wie 2-Hydroxy-2-methylpropiophenon und 1-[4-(2-Hydroxyethoxy)-phenyl]-2-hydroxy-2-methyl-1-propan-1-on, Redoxinitiatoren, wie Natriumpersulfat/ Hydroxymethylsulfinsäure, Ammoniumperoxodisulfat/Hydroxymethylsulfinsäure, Wasserstoffperoxid/Hydroxymethylsulfinsäure, Natriumpersulfat/Ascorbinsäure, Ammoniumperoxodisulfat/Ascorbinsäure und Wasserstoffperoxid/Ascorbinsäure, Photoinitiatoren, wie 1-[4-(2-Hydroxyethoxy)-phenyl]-2-hydroxy-2-methyl-1-propan-1-on, sowie deren Mischungen.

Die Initiatoren werden in üblichen Mengen eingesetzt, beispielsweise in Mengen von 0,001 bis 5 Gew.-%, vorzugsweise 0,01 bis 1 Gew.-%, bezogen auf die Monomeren a).

Die Polymerisationsinhibitoren können auch durch Absorption, beispielsweise an Aktivkohle, entfernt werden.

Der Feststoffgehalt der Monomerlösung beträgt vorzugsweise mindestens 35 Gew.-%, bevorzugt mindestens 38 Gew.-%, besonders bevorzugt mindestens 40 Gew.-%, ganz besonders bevorzugt mindestens 42 Gew.-%. Dabei ist der Feststoffgehalt die Summe aller nach der Polymerisation nichtflüchtigen Bestandteile. Dies sind Monomer a), Vernetzer b) und Initiator c).

Der Sauerstoffgehalt der Monomerlösung beträgt vorzugsweise mindestens 1 Gew.-ppm, besonders bevorzugt mindestens 2 Gew.-ppm, besonders bevorzugt mindestens 5 Gew.-ppm. Auf die übliche Inertisierung der Monomerlösung kann daher weitgehend verzichtet werden.

Der erhöhte Sauerstoffgehalt stabilisiert die Monomerlösung und ermöglicht die Verwendung geringerer Mengen an Polymerisationsinhibitor und vermindert damit die durch den Polymerisationsinhibitor verursachten Produktverfärbungen.

Die Monomerlösung wird zur Polymerisation in die Gasphase dosiert. Der Sauerstoffgehalt der Gasphase beträgt vorzugsweise 0,001 bis 0,15 Vol.-%, besonders bevorzugt 0,002 bis 0,1 Vol.-%, ganz besonders bevorzugt 0,005 bis 0,05 Vol.-%.

Die Gasphase enthält neben Sauerstoff vorzugsweise nur inerte Gase, d.h. Gase, die unter Reaktionsbedingungen nicht in die Polymerisation eingreifen, beispielsweise Stickstoff und/oder Wasserdampf.

Die Monomerlösung wird unter Ausbildung von Tropfen in die Gasphase dosiert. Die Tropfen können beispielsweise mittels einer Vertropferplatte erzeugt werden.

Eine Vertropferplatte ist eine Platte mit mindestens einer Bohrung, wobei die Flüssigkeit von oben durch die Bohrung tritt. Die Vertropferplatte bzw. die Flüssigkeit kann in Schwingungen versetzt werden, wodurch an der Unterseite der Vertropferplatte je Bohrung eine idealerweise monodisperse Tropfenkette erzeugt wird. In einer bevorzugten Ausführungsform wird die Vertropferplatte nicht angeregt.

Die Anzahl und die Größe der Bohrungen werden gemäß der gewünschten Kapazität und Tropfengröße ausgewählt. Der Tropfendurchmesser beträgt dabei üblicherweise das 1,9fache des Durchmessers der Bohrung. Wichtig ist hierbei, dass die zu vertropfende Flüssigkeit nicht zu schnell durch die Bohrung tritt bzw. der Druckverlust über die Bohrung nicht zu groß ist. Ansonsten wird die Flüssigkeit nicht vertropft, sondern der Flüssigkeitsstrahl wird infolge der hohen kinetischen Energie zerrissen (versprüht). Der Vertropfer wird im Strömungsbereich des laminaren Strahlzerfalls betrieben, d.h. die Reynoldszahl bezogen auf den Durchsatz pro Bohrung und den Bohrungsdurchmesser ist vorzugsweise kleiner als 2.000, bevorzugt kleiner 1.000, besonders bevorzugt kleiner 500, ganz besonders bevorzugt kleiner 100. Der Druckverlust über die Bohrung beträgt vorzugsweise weniger als 2,5 bar, besonders bevorzugt weniger als 1,5 bar, ganz besonders bevorzugt weniger als 1 bar.

Die Vertropferplatte weist üblicherweise mindestens eine, vorzugsweise mindestens 10, besonders bevorzugt mindestens 50, und üblicherweise bis zu 10.000, vorzugsweise bis zu 5.000, besonders bevorzugt bis zu 1.000, Bohrungen auf, wobei die Bohrungen üblicherweise gleichmäßig über die Vertropferplatte verteilt sind, vorzugsweise in der sogenannten Dreiecksteilung, d.h. jeweils drei Bohrungen bilden die Ecken eines gleichseitigen Dreiecks. Der Durchmesser der Bohrungen wird an die gewünschte Tropfengröße angepasst.

Die Tropfen können aber auch mittels pneumatischer Ziehdüsen, Rotation, Zerschneiden eines Strahls oder schnell ansteuerbarer Mikroventildüsen erzeugt werden.

In einer pneumatischen Ziehdüse wird ein Flüssigkeitsstrahl zusammen mit einem Gasstrom durch eine Blende beschleunigt. Über die Gasmenge kann der Durchmesser des Flüssigkeitsstrahls und damit der Tropfendurchmesser beeinflusst werden.

Bei der Tropfenerzeugung durch Rotation tritt die Flüssigkeit durch die Öffnungen einer rotierenden Scheibe. Durch die auf die Flüssigkeit wirkende Fliehkraft werden Tropfen definierter Größe abgerissen. Bevorzugte Vorrichtungen zur Rotationsvertropfung werden beispielsweise in DE 43 08 842 A1 beschrieben

Der austretende Flüssigkeitsstrahl kann aber auch mittels eines rotierenden Messers in definierte Segmente zerschnitten werden. Jedes Segment bildet anschließend einen Tropfen.

Bei Verwendung von Mikroventildüsen werden direkt Tropfen mit definiertem Flüssigkeitsvolumen erzeugt.

Bevorzugt strömt die Gasphase als Trägergas durch den Reaktionsraum. Dabei kann das Trägergas im Gleichstrom oder im Gegenstrom zu den frei fallenden Tropfen der Monomerlösung durch den Reaktionsraum geführt werden, bevorzugt im Gleichstrom. Vorzugsweise wird das Trägergas nach einem Durchgang zumindest teilweise, bevorzugt zu mindestens 50%, besonders bevorzugt zu mindestens 75%, als Kreisgas in den Reaktionsraum zurückgeführt. Üblicherweise wird eine Teilmenge des Trägergases nach jedem Durchgang ausgeschleust, vorzugsweise bis zu 10%, besonders bevorzugt bis zu 3%, ganz besonders bevorzugt bis zu 1 %.

Die Polymerisation wird vorzugsweise in einer laminaren Gasströmung durchgeführt. Eine laminare Gasströmung ist eine Gasströmung, bei der sich die einzelnen Schichten der Strömung nicht vermischen, sondern parallel bewegen. Ein Maß für die Strömungsverhältnisse ist die Reynolds-Zahl (Re). Unterhalb einer kritischen Reynolds-Zahl (Reₖₙₜ) von 2300 ist die Gasströmung laminar. Die Reynolds-Zahl der laminaren Gasströmung beträgt vorzugsweise weniger als 2000, besonders bevorzugt weniger als 1500, ganz besonders bevorzugt weniger als 1000. Der untere Grenzfall der laminaren Inertgasströmung ist eine ruhende Inertgasatmosphäre (Re = 0), d.h., es wird nicht kontinuierlich Inertgas eingespeist.

Die Gasgeschwindigkeit wird vorzugsweise so eingestellt, dass die Strömung im Reaktor gerichtet ist, beispielsweise liegen keine der allgemeinen Strömungsrichtung entgegengesetzte Konvektionswirbel vor, und beträgt beispielsweise 0,01 bis 5 m/s, vorzugsweise 0,02 bis 4 m/s, besonders bevorzugt 0,05 bis 3 m/s, ganz besonders bevorzugt 0,1 bis 2 m/s.

Das Trägergas wird zweckmäßigerweise vor dem Reaktor auf die Reaktionstemperatur vorgewärmt.

Die Reaktionstemperatur beträgt bei der thermisch induzierten Polymerisation vorzugsweise 70 bis 250°C, besonders bevorzugt 100 bis 220°C, ganz besonders bevorzugt 120 bis 200°C.

Die Reaktion kann im Überdruck oder im Unterdruck durchgeführt werden, ein Unterdruck von bis zu 100 mbar gegenüber dem Umgebungsdruck ist bevorzugt.

Das Reaktionsabgas, d.h. das der Reaktionsraum verlassende Trägergas, kann beispielsweise in einem Wärmeaustauscher abgekühlt werden. Dabei kondensieren Wasser und nicht umgesetztes Monomer a). Danach kann das Reaktionsabgas zumindest teilweise wieder aufgewärmt und als Kreisgas in den Reaktor zurückgeführt werden. Ein Teil des Reaktionsabgases kann ausgeschleust und durch frisches Trägergas ersetzt werden, wobei im Reaktionsabgas enthaltenes Wasser und nicht umgesetzte Monomere a) abgetrennt und rückgeführt werden können.

Besonders bevorzugt ist ein Wärmeverbund, dass heißt, ein Teil der Abwärme beim Abkühlen des Abgases wird zum Aufwärmen des Kreisgases verwendet.

Die Reaktoren können begleitbeheizt werden. Die Begleitheizung wird dabei so eingestellt, dass die Wandtemperatur mindestens 5°C oberhalb der Reaktorinnentemperatur liegt und die Kondensation an den Reaktorwänden zuverlässig vermieden wird.

Das Reaktionsprodukt kann dem Reaktor in üblicher Weise entnommen werden, vorzugsweise am Boden über eine Förderschnecke, und gegebenenfalls bis zur gewünschten Restfeuchte und zum gewünschten Restmonomerengehalt getrocknet werden.

Die Polymerpartikel können zur weiteren Verbesserung der Eigenschaften nachvernetzt werden.

Nachvernetzer sind Verbindungen, die mindestens zwei Gruppen enthalten, die mit den Carboxylatgruppen des Hydrogels kovalente Bindungen bilden können. Geeignete Verbindungen sind beispielsweise Alkoxysiliylverbindungen, Polyaziridine, Polyamine, Polyamidoamine, Di- oder Polyepoxide, wie in EP 83 022 A2, EP 543 303 A1 und EP 937 736 A2 beschrieben, di- oder polyfunktionelle Alkohole, wie in DE 33 14 019 A1, DE 35 23 617 A1 und EP 450 922 A2 beschrieben, oder β-Hydroxyalkylamide, wie in DE 102 04 938 A1 und US 6,239,230 beschrieben.

Des weiteren sind in DE 40 20 780 C1 zyklische Karbonate, in DE 198 07 502 A1 2-Oxazolidon und dessen Derivate, wie 2-Hydroxyethyl-2-oxazolidon, in DE 198 07 992 C1 Bis- und Poly-2-oxazolidinone, in DE 198 54 573 A1 2-Oxotetrahydro-1,3-oxazin und dessen Derivate, in DE 198 54 574 A1 N-Acyl-2-Oxazolidone, in DE 102 04 937 A1 zyklische Harnstoffe, in DE 103 34 584 A1 bizyklische Amidacetale, in EP 1 199 327 A2 Oxetane und zyklische Harnstoffe und in WO 2003/31482 A1 Morpholin-2,3-dion und dessen Derivate als geeignete Nachvernetzer beschrieben.

Die Menge an Nachvernetzer beträgt vorzugsweise 0,01 bis 1 Gew.-%, besonders bevorzugt 0,05 bis 0,5 Gew.-%, ganz besonders bevorzugt 0,1 bis 0,2 Gew.-%, jeweils bezogen auf das Polymer.

Die Nachvernetzung wird üblicherweise so durchgeführt, dass eine Lösung des Nachvernetzers auf das Hydrogel oder die trockenen Polymerpartikel aufgesprüht wird. Im Anschluss an das Aufsprühen wird thermisch getrocknet, wobei die Nachvernetzungsreaktion sowohl vor als auch während der Trocknung stattfinden kann.

Das Aufsprühen einer Lösung des Vernetzers wird vorzugsweise in Mischern mit bewegten Mischwerkzeugen, wie Schneckenmischer, Paddelmischer, Scheibenmischer, Pflugscharmischer und Schaufelmischer, durchgeführt werden. Besonders bevorzugt sind Vertikalmischer, ganz besonders bevorzugt sind Pflugscharmischer und Schaufelmischer. Geeignete Mischer sind beispielsweise Lödige-Mischer, Bepex-Mischer, Nauta-Mischer, Processall-Mischer und Schugi-Mischer.

Die thermische Trocknung wird vorzugsweise in Kontakttrocknern, besonders bevorzugt Schaufeltrocknern, ganz besonders bevorzugt Scheibentrocknern, durchgeführt. Geeignete Trockner sind beispielsweise Bepex-Trockner und Nara-Trockner. Überdies können auch Wirbelschichttrockner eingesetzt werden.

Die Trocknung kann im Mischer selbst erfolgen, durch Beheizung des Mantels oder Einblasen von Warmluft. Ebenso geeignet ist ein nachgeschalteter Trockner, wie beispielsweise ein Hordentrockner, ein Drehrohrofen oder eine beheizbare Schnecke. Besonders vorteilhaft wird in einem Wirbelschichttrockner gemischt und getrocknet.

Bevorzugte Trocknungstemperaturen liegen im Bereich 170 bis 250°C, bevorzugt 180 bis 220°C, und besonders bevorzugt 190 bis 210°C. Die bevorzugte Verweilzeit bei dieser Temperatur im Reaktionsmischer oder Trockner beträgt vorzugsweise mindestens 10 Minuten, besonders bevorzugt mindestens 20 Minuten, ganz besonders bevorzugt mindestens 30 Minuten.

Das erfindungsgemäße Verfahren ermöglicht die Herstellung wasserabsorbierender Polymerpartikel mit einer hohen Zentrifugenretentionskapazität (CRC), wenig Extrahierbaren und wenig Restmonomeren.

Die wasserabsorbierenden Polymerpartikel werden mittels der nachfolgend beschriebenen Testmethoden geprüft.

### Methoden:

### Restmonomere (Residual monomers)

Die Restmonomeren der wasserabsorbierenden Polymerpartikel werden gemäß der von der EDANA (European Disposables and Nonwovens Association) empfohlenen Testmethode Nr. 410.2-02 "Residual monomers" bestimmt.

### Zentrifugenretentionskapazität (CRC Centrifuge Retention Capacity)

Die Zentrifugenretentionskapazität der wasserabsorbierenden Polymerpartikel wird gemäß der von der EDANA (European Disposables and Nonwovens Association) empfohlenen Testmethode Nr. 441.2-02 "Centrifuge retention capacity" bestimmt.

### Extrahierbare (Extractable)

Die Gehalt an Extrahierbaren (extrahierbare Anteile) der wasserabsorbierenden Polymerpartikel wird gemäß der von der EDANA (European Disposables and Nonwovens Association) empfohlenen Testmethode Nr. 470.2-02 "Extractable" bestimmt.

Die EDANA-Testmethoden sind beispielsweise erhältlich bei der European Disposables and Nonwovens Association, Avenue Eugène Plasky 157, B-1030 Brüssel, Belgien.

### Beispiele:

### Beispiel 1

14,3 kg Natriumacrylat (37,5 gew.-%ige Lösung in Wasser), 1,4 kg Acrylsäure und 350 g Wasser wurden mit 22 g 15-fach ethoxiliertem Trimethylolpropantriacrylat gemischt. Die Lösung wurde in einen erwärmten, mit Stickstoffatmosphäre gefüllten Vertropfungsturm vertropft (180°C, 12m Höhe, 2m Breite, Gasgeschwindigkeit 0,1 m/s im Gleichstrom). Die Dosiergeschwindigkeit der Monomerlösung betrug 32 kg/h, die Temperatur der Monomerlösung betrug 25°C. Die Vertropferplatte hatte 60 Bohrungen à 200 µm. Der Vertropfer hatte einen Innendurchmesser von 40 mm und eine Innenhöhe von 2 mm. Der Initiator wurde vor dem Vertropfer über statische Mischer in die Monomerlösung dosiert. Als Initiator wurde eine 3 gew.-%ige Lösung von 2,2'-Azobis[2-(2-imidazolin-2-yl)propan]dihydrochlorid in Wasser verwendet. Die Dosiergeschwindigkeit der Initiatorlösung betrug 2,2 kg/h, die Temperatur der Initiatorlösung betrug 25°C. Mischer und Vertropfer waren direkt miteinander verbunden.

Die Versuchsergebnisse sind in der Tabelle 1 zusammengefasst.

### Beispiele 2 bis 4

14,3 kg Natriumacrylat (37,5 gew.-%ige Lösung in Wasser), 1,4 kg Acrylsäure und 350 g Wasser wurden mit 22 g 15-fach ethoxiliertem Trimethylolpropantriacrylat gemischt. Die Lösung wurde in einen erwärmten, mit Stickstoffatmosphäre gefüllten Vertropfungsturm vertropft (180°C, 12m Höhe, 2m Breite, Gasgeschwindigkeit 0,1 m/s im Gleichstrom). Die Dosiergeschwindigkeit der Monomerlösung betrug 16 kg/h, die Temperatur der Monomerlösung betrug 25°C. Die Vertropferplatte hatte 30 Bohrungen à 200 µm. Der Vertropfer hatte einen Innendurchmesser von 40 mm und eine Innenhöhe von 2 mm. Der Initiator wurde vor dem Vertropfer über statische Mischer in die Monomerlösung dosiert. Als Initiator wurde eine 3 gew.-%ige Lösung von 2,2'-Azobis[2-(2-imidazolin-2-yl)propan]dihydrochlorid in Wasser verwendet. Die Dosiergeschwindigkeit der Initiatorlösung betrug 1,1 kg/h, die Temperatur der Initiatorlösung betrug 25°C. Die Verweilzeit zwischen Initiatorzugabe und Tropfenerzeugung wurde über die Länge der Rohrleitung zwischen Mischer und Vertropfer eingestellt.

Die Versuchsergebnisse sind in der Tabelle 1 zusammengefasst.

**Tab. 1: Versuchsergebnisse**

| Beispiel | Verweilzeit | CRC/Extrahierbare | CRC/Restmonomere | Druckverlustanstieg um 50% |
|---|---|---|---|---|
| 1*) | 0,3 s | 4,5 | 36 | 30 h |
| 2*) | 0,5 s | 8,2 | 144 | 25 h |
| 3 | 1,5 s | 8,6 | 173 | 20 h |
| 4*) | 110 s | 8,8 | 175 | 4 h |
| *) Vergleichsbeispiel | | | | |

## Patentansprüche

1. Verfahren zur Herstellung wasserabsorbierender Polymerpartikel durch Polymerisation von Tropfen, enthaltend
a) mindestens ein ethylenisch ungesättigtes Monomer,
b) mindestens einen Vernetzer,
c) mindestens einen Initiator,
d) Wasser,
in einer die Tropfen umgebenden Gasphase, **dadurch gekennzeichnet, dass** der Initiator c) der Monomerlösung 1,2 bis 15 Sekunden vor der Tropfenerzeugung zugesetzt wird.

2. Verfahren gemäß Anspruch 1, **dadurch gekennzeichnet, dass** der Initiator vor einem statischen Mischer zugesetzt wird.

3. Verfahren gemäß Anspruch 1 oder 2, **dadurch gekennzeichnet, dass** der Sauerstoffgehalt der Monomerlösung mindestens 1 Gew.-ppm beträgt.

4. Verfahren gemäß einem der Ansprüche 1 bis 3, **dadurch gekennzeichnet, dass** die Monomerlösung weniger als 160 Gew.-ppm, bezogen auf das ethylenisch ungesättigtes Monomer a), eines Polymerisationsinhibitors enthält.

5. Verfahren gemäß Anspruch 4, **dadurch gekennzeichnet, dass** der Polymerisationsinhibitor Hydrochinonmonomethylether ist.

6. Verfahren gemäß einem der Ansprüche 1 bis 5, **dadurch gekennzeichnet, dass** die Tropfen einen mittleren Durchmesser von mindestens 200 µm aufweisen.

7. Verfahren gemäß einem der Ansprüche 1 bis 6, **dadurch gekennzeichnet, dass** das Monomer a) mindestens eine Säuregruppe aufweist.

8. Verfahren gemäß Anspruch 7, **dadurch gekennzeichnet, dass** die Säuregruppen des Monomeren a) zumindest teilweise neutralisiert sind.

9. Verfahren gemäß einem der Ansprüche 1 bis 8, **dadurch gekennzeichnet, dass** Monomer a) zu mindestens 50 mol-% Acrylsäure ist.

10. Verfahren gemäß einem der Ansprüche 1 bis 9, **dadurch gekennzeichnet, dass** die erhaltenen Polymerpartikel in mindestens einem weiteren Verfahrensschritt getrocknet und/oder nachvernetzt werden.

## Claims

1. A process for preparing water-absorbing polymer beads by polymerizing droplets comprising
a) at least one ethylenically unsaturated monomer,
b) at least one crosslinker,
c) at least one initiator,
d) water,
in a gas phase surrounding the droplets, which comprises adding the initiator c) to the monomer solution from 1.2 to 15 seconds before the droplets are generated.

2. The process according to claim 1, wherein the initiator is added upstream of a static mixer.

3. The process according to claim 1 or 2, wherein the oxygen content of the monomer solution is at least 1 ppm by weight.

4. The process according to any of claims 1 to 3, wherein the monomer solution comprises less than 160 ppm by weight, based on the ethylenically unsaturated monomer a), of a polymerization inhibitor.

5. The process according to claim 4, wherein the polymerization inhibitor is hydroquinone monomethyl ether.

6. The process according to any of claims 1 to 5, wherein the droplets have a mean diameter of at least 200 µm.

7. The process according to any of claims 1 to 6, wherein the monomer a) has at least one acid group.

8. The process according to claim 7, wherein the acid groups of the monomer a) have been at least partly neutralized.

9. The process according to any of claims 1 to 8, wherein the monomer a) is acrylic acid to an extent of at least 50 mol%.

10. The process according to any of claims 1 to 9, wherein the resulting polymer beads are dried and/or postcrosslinked in at least one further process step.

## Revendications

1. Procédé de fabrication de particules polymères absorbant l'eau par polymérisation de gouttes contenant
a) au moins un monomère éthyléniquement insaturé,
b) au moins un agent de réticulation,
c) au moins un initiateur,
d) de l'eau,
dans une phase gazeuse entourant les gouttes, **caractérisé en ce que** l'initiateur c) est ajouté à la solution de monomères 1,2 à 15 secondes avant la formation des gouttes.

2. Procédé selon la revendication 1, **caractérisé en ce que** l'initiateur est ajouté avant un mélangeur statique.

3. Procédé selon la revendication 1 ou 2, **caractérisé en ce que** la teneur en oxygène de la solution de monomères est d'au moins 1 ppm en poids.

4. Procédé selon l'une quelconque des revendications 1 à 3, **caractérisé en ce que** la solution de monomères contient moins de 160 ppm en poids, par rapport au monomère éthyléniquement insaturé a), d'un inhibiteur de polymérisation.

5. Procédé selon la revendication 4, **caractérisé en ce que** l'inhibiteur de polymérisation est l'éther monométhylique d'hydroquinone.

6. Procédé selon l'une quelconque des revendications 1 à 5, **caractérisé en ce que** les gouttes présentent un diamètre moyen d'au moins 200 µm.

7. Procédé selon l'une quelconque des revendications 1 à 6, **caractérisé en ce que** le monomère a) comporte au moins un groupe acide.

8. Procédé selon la revendication 7, **caractérisé en ce que** les groupes acides du monomère a) sont neutralisés au moins en partie.

9. Procédé selon l'une quelconque des revendications 1 à 8, **caractérisé en ce que** le monomère a) est de l'acide acrylique à au moins 50 % en moles.

10. Procédé selon l'une quelconque des revendications 1 à 9, **caractérisé en ce que** les particules polymères obtenues sont séchées et/ou post-réticulées en au moins une étape de procédé supplémentaire.
